# EUROPÄISCHE PATENTSCHRIFT

(11) **EP 1 031 864 B1**
(45) Veröffentlichungstag und Bekanntmachung des Hinweises auf die Patenterteilung: **31.03.2004**
(21) Anmeldenummer: 99403157.3
(22) Anmeldetag: 16.12.1999
(51) Int. Cl.: G02B 6/44, C03C 25/10, B29C 47/06

(54) **Langgestrecktes flexibles Element mit extrudierter Umhüllung**
Elongate flexible element with extruded sheath
Elément flexible allongé avec gaine extrudée

(30) Priorität: 25.02.1999 DE 19908110
(43) Veröffentlichungstag der Anmeldung: 30.08.2000
(73) Patentinhaber: Nexans, 75008 Paris (FR)
(72) Erfinder: Rous, Friedemann, 95444 Bayreuth (DE); Mehl, Alfred, 91166 Georgensgmünd (DE)
(74) Vertreter: Döring, Roger, Dipl.-Ing.

(56) Entgegenhaltungen:
- EP-A- 0 336 806
- EP-A- 0 757 265
- US-A- 4 664 472

## Beschreibung

Die Erfindung bezieht sich auf ein langgestrecktes flexibles Element mit einem Kernelement zur Energie- und/oder Datenübertragung und einer extrudierten polymeren Umhüllung, die das Kernelement umschließt.

Polymere optische Fasern, die beispielsweise aus Polymethylmethacrylat (PMMA) und/oder fluoriertem PMMA bestehen, finden unter anderem im Fahrzeug- oder Maschinenbau Verwendung, da sie mechanisch robust und einfach zu handhaben sind. Sie umfassen einen Kern mit einem Mantel zur Führung des Lichtes. Zum Schutz vor Fremdlicht und Schädigungen durch äußere Einflüsse sind die Fasern zudem mit einer äußeren Umhüllung versehen. In der Regel ist die Umhüllung auf die Oberfläche der Faser extrudiert. Aufgrund der Anwendungsbereiche soll die Umhüllung nicht nur mechanische Beschädigungen und Lichteinfall in die Faser verhindern sondern auch einen Schutz gegen Feuchtigkeit, Chemikalien, insbesondere Öle und Fette, und Temperaturbelastungen bieten und ggf. flammfest sein.

Um die optische Übertragung der Fasern nicht durch mechanische Spannungen zu beeinträchtigen, ist es erforderlich, daß das Material der Umhüllung schrumpfungsarm ist. Daher wird im Gebrauchsmuster DE 92 09 018 vorgeschlagen, anstelle von Umhüllungen aus Polyethylen (PE), Polypropylen (PP), chloriertem Polyethylen oder Polyvinylchlorid (PVC) solche aus Polyamid, Polyurethan oder Polyoxymethylen (POM) zu verwenden. Als nachteilig erweist sich jedoch, daß diese Materialien lediglich einen Teil der notwendigen Anforderungen erfüllen, wobei ihre Kosten, etwa im Verhältnis zu Polyolefinen, vergleichsweise hoch sind. Auch für viele Kabeltypen mit speziellen Einsatzbereichen, zum Beispiel Roboterschleppkabel, besteht ein Bedarf an Umhüllungen mit geeigneten Kombinationen unterschiedlicher Eigenschaften.

Die EP-A-0 757 265 hat eine schrumpfarme, dimensionsstabile KunststoffUmmantelung für Lichtwellenleiter zum Gegenstand. Es soll hier die Aufgabe gelöst werden, ein Kunststoff-Ummantelungsmaterial zu finden, das sich schrumpfarm verarbeiten läßt, keine oder nur eine geringe Nachkristallisationsneigung aufweist, einen niedrigen thermischen Ausdehnungskoeffizienten und eine sehr gute Beständigkeit gegen Chemikalien hat.

Als Lösung für diese Aufgabe wird vorgeschlagen, ein durch Extrusionsverfahren aufbringbares Polymerblend zu verwenden, das 5 - 95 Gew% Polyamid 11, Polyamid 12, Polyamid 1212, Polyamid 1012 und Gemische davon sowie 95 bis 5 Gew% Polyphenylenoxid, Polyphenylensulfid und Gemische davon enthält. Die Ummantelung kann aus einer ersten inneren Schicht und einer zweiten äußeren Schicht bestehen, wobei die äußere Schicht aus einem Polyester, Polyether, Polyamid, Polyurethan, Polyethylen, Polyolefin oder Gemischen der vorgenannten Polymere hergestellt sein kann.

Vor diesem Hintergrund hat es sich die Erfindung zur Aufgabe gestellt, eine Umhüllung für langgestreckte Elemente zu entwickeln, die auf kostengünstige Weise eine Kombination chemischer und mechanischer Anforderungen erfüllt.

Diese Aufgabe wird erfindungsgemäß dadurch gelöst, daß zur Verbesserung der Haftung der beiden Schichten die erste oder die zweite Schicht eine Mischung beider Polymere umfaßt.

Ein Grundgedanke der Erfindung besteht darin, daß sich die notwendigen Eigenschaften der Umhüllung durch eine Kombination von Schichten aus unterschiedlichen Materialien erreichen lassen. Zweckmäßig wird die innere, dem Kernelement zugewandte Seite der Umhüllung von einem vergleichsweise harten Kunststoff gebildet, der einen mechanischen Schutz des Kernelements darstellt. Die äußere Oberfläche ist dagegen zum Beispiel ein weicher, vorzugsweise chemikalienbeständiger Kunststoff. Auch die Kombination einer flammfesten inneren Schicht mit einer mechanisch festen Oberfläche ist vorteilhaft. Eine weiche innere Schicht ist als Pufferlage zwischen dem Kernelement und einer härteren äußeren Schicht geeignet. Durch eine Optimierung der Schichtdicken läßt sich die Umhüllung schrumpfungsarm und kostengünstig herstellen. Möglich ist es, drei oder mehr Schichten vorzusehen, um die gewünschten Eigenschaften zu erreichen.

Geeignete Kombinationen von Polymeren besitzen jedoch den Nachteil, daß das Haftungsvermögen von aufeinander extrudierten Schichten der reinen Materialien gering ist. Entsprechend wird kein hinreichender Materialverbund erzielt, so daß sich die Umhüllung schlecht entfernen läßt und ihre mechanische Belastbarkeit reduziert ist. Dies gilt insbesondere dann, wenn Schichten polarer Kunststoffe, etwa Polyurethan, mit unpolaren Kunststoffen wie z.B. Polypropylen kombiniert werden. Auch bei Kombination unterschiedlicher polarer Kunststoffe miteinander, z.B. Polyurethan und Polyoxymethylen, oder unterschiedlicher unpolarer Kunststoffe ist aufgrund der notwendigen Verarbeitungsparameter, etwa der Extrusionstemperatur, häufig keine genügende Haftung der Schichten erreichbar.

Bei der erfindungsgemäßen Umhüllung bildet ein erstes Polymer ausschließlich oder zumindest zur Hälfte das polymere Material einer Schicht. Um einen festen Schichtverbund zu erreichen wird vorgeschlagen, daß in einer angrenzenden Schicht der Umhüllung eine Mischung des ersten mit einem zweiten Polymer vorhanden ist. Der Anteil des ersten Polymers an der Mischung ist erheblich geringer als in der ersten Schicht und es bildet zum Beispiel die Hälfte oder ein Drittel des polymeren Materials dieser Schicht. Der Anteil des ersten Polymers in beiden aneinandergrenzenden Schichten bewirkt eine gute Haftung und damit einen festen Verbund. Hingegen unterscheiden sich die Eigenschaften der Schichten erheblich mit dem Anteil des ersten Polymers. Besteht die Umhüllung aus drei oder mehr Schichten, sind mehrere Schichten mit derartigen Mischungen möglich. Das erste Polymer kann seinerseits eine Mischung chemisch verwandter Materialien, etwa von PP und EPDM sein; gleiches gilt für das zweite Polymer.

Die Herstellung der Umhüllung erfolgt durch Extrusion. Zweckmäßig wird sie in einem Schritt vorgenommen, bei dem zumindest zwei Materialien in einen Extrusionskopf gefördert werden, um den Schichtverbund zu optimieren, beispielsweise durch Kreuzkopfextrusion. Denkbar ist auch, die Umhüllung in mehreren, aufeinander folgenden Schritten herzustellen, etwa durch Tandemextrusion.

Aufgrund des festen Materialverbundes ist die erfindungsgemäße Umhüllung leicht abmantelbar, etwa zur Konfektionierung des Elementes. Sie ist mechanisch fest, spannungsrißbeständig und schrumpfungsarm herstellbar. Ebenso läßt sich eine gute Chemikalienbeständigkeit, speziell gegenüber Ölen und Fetten, sowie eine geringe Feuchtigkeitsaufnahme erreichen. Schließlich läßt sich die Umhüllung mit hoher Flexibilität bei Kälte und guter Wärmebeständigkeit herstellen. Sie ist speziell für die Verwendung im Maschinen- und Fahrzeugbau, etwa im Kraftfahrzeug-, Schiff- oder Flugzeugbau gut geeignet.

In einer vorteilhaften Ausgestaltung der Erfindung enthält die Mischung beider Polymere einen Verträglichkeitsvermittler, etwa ein Maleinsäureanhydrid-haltiges Copolymer. Der Verträglichkeitsvermittler verhindert eine Trennung der Mischung im geschmolzenen Zustand in unterschiedliche Phasen. Somit vereinfacht sich insbesondere die Herstellung und Handhabung von Mischungen aus polaren und unpolaren Polymeren.

Um spezifische Eigenschaften einer Schicht zu optimieren, kann sie ein reines Polymer enthalten. Häufig ist es jedoch zweckmäßig, daß beide aneinandergrenzenden Schichten eine Mischung des ersten und zweiten Polymers umfassen. Auf diese Weise ist bei vergleichsweise geringer Beimischung von zum Beispiel jeweils 20% des anderen Polymers eine gute Haftung erreichbar.

Bevorzugt gehen die Schichten der Umhüllung ohne scharfe Grenzfläche ineinander über, etwa durch eine Führung des Extrusionsprozesses, die eine randseitige Verschmelzung der Materialien bewirkt. Von Vorteil ist insbesondere ein kontinuierlicher Übergang vom Material der inneren Oberfläche zum Material der äußeren Oberfläche der Umhüllung ohne Ausbildung definierter Schichten.

Eine zweckmäßige Ausbildung der Umhüllung besteht darin, daß ihre äußere oder innere Schicht eine Mischung mit einem Polymer einer angrenzenden Schicht ist. Auf diese Weise ist es möglich, die Umhüllung aus lediglich zwei Schichten aufzubauen.

Alternativ bildet die erfindungsgemäße Polymermischung bzw. das Copolymer in einer zumindest dreischichtigen Umhüllung eine haftvermittelnde Lage zwischen zwei angrenzenden Schichten, wobei der polymer Anteil der ersten Schicht überwiegend aus dem ersten und der der zweiten Schicht überwiegend aus dem zweiten Polymer besteht. Bei einer dreischichtigen Umhüllung umfaßt die haftvermittelnde Lage somit ein Gemisch der Materialien ihrer beiden Oberflächen.

Die Umhüllung eignet sich insbesondere zum Schutz polymerer optischer Fasern. Alternativ ist sie als Isolierung oder Mantel von elektrischen Kabeln und Leitungen für spezielle Einsatzzwecke geeignet, insbesondere für Schleppkabel, wie sie für Industrieroboter gebräuchlich sind. Im letzteren Fall wird die Umhüllung zweckmäßig auf den Leitungsschirm oder eine Bewicklung der Kabelseele extrudiert.

Als vorteilhafte Materialien für die innere Oberfläche der Umhüllung haben sich Polyacetale, speziell Polyoxymethylen, Polyolefine oder Polyester bewährt. Auch Mischungen und Copolymere dieser Werkstoffe untereinander und mit weiteren Materialien sind möglich. Zweckmäßige Polyolefine sind insbesondere Polypropylen sowie Copolymere und Mischungen von Polypropylen, beispielsweise mit EPDM (Ethylen-Propylen-Dien-Terpolymer). Durch Verwendung von Polyetherimid mit Silikon als Copolymer läßt sich eine gute Flammfestigkeit im Brandfall erreichen.

Bevorzugte Materialien für die äußere Oberfläche der Umhüllung sind speziell thermoplastische Polyurethane (TPU), Polyamide, Polyetherimide oder Polyester. Auch in diesem Fall sind Mischungen und Copolymere untereinander und mit anderen Kunststoffen möglich.

Abhängig vom Einsatzzweck können den Kunststoffen der Umhüllung Zusatz-, Füll- und Hilfsstoffe zugesetzt werden. Beispielsweise sind mit Kreide und/oder Talkum gefüllte Kunststoffe, z.B. Polyurethane verwendbar. Für brandgefährdete Einsatzzwecke sind Kunststoffe vorteilhaft, die ein Flammschutzmittel enthalten, beispielsweise Melamincyanurat, Ammoniumpolyphosphate oder Mischungen davon. Auch Flammschutzsysteme, die Metallhydroxid bzw. -carbonat und Silikonöl bzw. -harz sowie metallorganisches Salz mit einem zweiwertigen Metall, etwa Magnesiumstearat, umfassen, sind geeignet. Ferner sind halogenhaltige Flammschutzmittel möglich. Zur Verbeserung der Eigenschaften der Kunststoffe ist ihre Vernetzung denkbar, inbesondere eine Strahlenvernetzung.

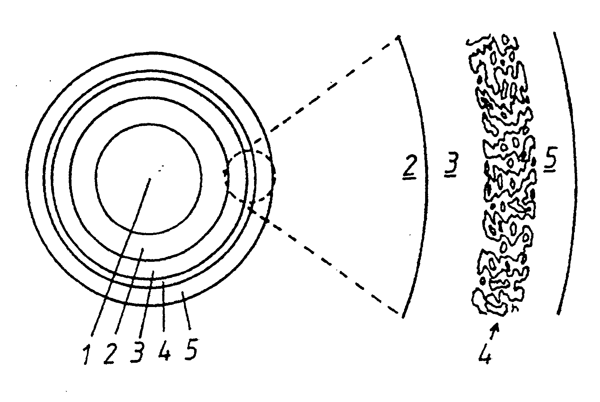

Im folgenden Beschreibungsteil sind Ausführungsbeispiele der Erfindung näher erläutert. Die Zeichnung zeigt einen schematischen Querschnitt durch die Umhüllung eines erfindungsgemäßen Elementes.

Das Kernelement des Elementes wird von einer polymeren optischen Faser gebildet, die aus einem lichtleitenden Kern (1 ) und einem Mantel (2) aufgebaut ist. Auf die Außenfläche des Mantels (2) ist eine Umhüllung extrudiert, die aus drei Schichten (3 - 5) besteht. Die inneren und äußeren Schichten (3, 5) bestehen aus Kunststoffen, die in Kombination miteinander die mechanischen, thermischen und chemischen Eigenschaften der Umhüllung optimieren. Die mittlere Schicht (4) bildet eine haftvermittelnde Lage, die einen festen Verbund der Umhüllung bewirkt. Wie die Ausschnittsvergrößerung zeigt, ist die haftvermittelnde Lage ein Gemisch zweier unterschiedlicher Materialien, die mit denen der angrenzenden Schichten (3, 5) identisch sind. Daher bildet sich bei geeigneter Prozeßführung keine definierte Grenze sondern ein kontinuierlicher Übergang zwischen den Schichten (3 - 5) aus. Die Dicke der Schichten kann sich in Abhängigkeit von den Anforderungen an die Umhüllung unterscheiden; beispielsweise kann eine vergleichsweise dicke innere Schicht (3), die insbesondere einen mechanischen Schutz der Faser bildet, von dünneren Schichten (4, 5) zur Haftvermittlung und zum chemischen Schutz umgeben werden.

Die folgende Tabelle beschreibt vorteilhafte Kombinationen von Materialien für die Umhüllung. Geeignet sind reine Materialien für die äußere und innere Schicht; denkbar ist jedoch auch ein Zusatz von Füllstoffen, etwa Kreide im Fall von TPU. Auslassungsstriche in der mittleren Spalte zeigen Umhüllungen aus lediglich zwei Schichten an.

| **innere Schicht** | **Zwischenschicht** | **äußere Schicht** |
|---|---|---|
| POM | POM-TPU-Gemisch | TPU |
| POM-TPU-Gemisch | --- | TPU |
| POM | POM-Polyamid-Gemisch | Polyamid |
| PP | PP-TPU-Gemisch | TPU |
| Polyester | Polyester-TPU-Gemisch | TPU |
| Polyester | Polyester-Polyamid-Gemisch | Polyamid |
| PP-TPU-Gemisch | --- | TPU |
| PP-TPU-Gemisch | --- | TPU-PP-Gemisch |
| Polyetherimidcopolymer-Polyester-Gemisch | --- | Polyester |
| Polyetherimidcopolymer-Polyester-Gemisch | --- | Polyetherimidcopolymer |

Geeignete Mischungsverhältnisse für die Zwischenschicht liegen zwischen 20:80 und 80:20 Gewichtsprozent des Materials der äußeren Schicht zum Material der inneren Schicht. Bevorzugt ist in diesen Fällen ein Verhältnis im Bereich von 50% zu 50% bis 70% zu 30% des Materials der äußeren zum Material der inneren Schicht. Wird die äußere oder innere Schicht von einem Gemisch gebildet, weicht das Mischungsverhältnis vorzugsweise erheblich von 50:50 ab und beträgt z. B. 80:20 Gewichtsprozent, um gut definierte Eigenschaften zu erreichen. Gemische polarer und unpolarer Polymere enthalten bevorzugt einen Verträglichkeitsvermittler, beispielsweise ein Maleinsäureanhydrid-haltiges Copolymer.

Auf diese Weise entstehen Elemente mit einer kostengünstigen, leicht abmantelbaren Umhüllung, die vorteilhafte, mechanische, thermische und chemische Eigenschaften aufweist.

### Beispiel 1

Als innere Schicht wurde ein Gemisch aus 80 Gew.-% Acetalcopolymer und 20% thermoplastischem Polyetherurethan-Elastomer hergestellt und mit einem handelsüblichen Extruder auf die Oberfläche einer polymeren optischen Faser aufgebracht. Dabei wurde ein Acetalcopolymer aus Trioxan mit geringen Anteilen von Comonomoren verwendet, das eine hohe Kristallinität und einen Schmelzindex MFR von 2,5 dg/min (bei 190°C und 2,16 kg Belastung) aufweist. Das Polyetherurethan-Elastomer hatte die Härte Shore A 87 und einen Schmelzindex MFR 40 ± 10 dg/min (190°C, 21,6 kg). Auf die innere Schicht wurde eine zweite Schicht extrudiert, die zu 100% aus demjenigen Polyetherurethan-Elastomer bestand, das dem Material der inneren Schicht beigemischt war.

### Beispiel 2

Auf eine polymere optische Faser wurde eine Schicht aus 100% Acetalcopolymer extrudiert. Als Zwischenschicht wurde darauf in einem weiteren Extrusionsvorgang ein Gemisch aus 50 Gew.-% Acetalcopolymer und 50 Gew.-% Polyetherurethan-Elastomer aufgebracht. Darüber wurde eine dritte Schicht aus 100 % Polyetherurethan-Elastomer extrudiert. Die verwendeten Polymere entsprachen denen des Beispiels 1.

### Beispiel 3

Auf eine polymere optische Faser wurde eine Schicht aus 100% eines Polypropylen-Copolymers mit Elastomeranteilen extrudiert, das eine Härte Shore D von 30 und einen Schmelzindex MFR von 0,6 dg/min (230°C, 2,16kg) aufweist. Als Zwischenschicht wurde in einem weiteren Extrusionsvorgang ein Gemisch aus 30 Gew.-% des PP-Copolymers der 1. Schicht, 68 Gew.-% thermoplastischem Polyetherurethan-Elastomer und als Verträglichkeitsvermittler 2 Gew.-% LLDPE mit aufgepfropftem Maleinsäureanhydrid aufgebracht. Das Polyetherurethan-Elastomer hatte eine Härte Shore A von 80 und einen Schmelzindex MFR 40 ± 10 dg/min (190°C, 21,6 kg). Darüber wurde eine dritte Schicht aus 100 % des in Beispiel 1 verwendeten Polyetherurethan-Elastomers extrudiert.

Die gemäß den vorgenannten Beispielen hergestellten Umhüllungen sind leicht von der optischen Faser abmantelbar, mechanisch fest, spannungsrißbeständig, schrumpfungsarm und für die Verwendung im Temperaturbereich zwischen -40°C und 90°C geeignet. Sie sind gegenüber Ölen und Fetten beständig und zeichnen sich durch eine geringe Feuchtigkeitsaufnahme aus.

## Patentansprüche

1. Langgestrecktes flexibles Element mit einem Kernelement (1,2) zur Energie- und/oder Datenübertragung und einer extrudierten polymeren Umhüllung aus zumindest einem ersten und einem zweiten Polymeren, wobei die Umhüllung aus einer ersten das Kernelement umhüllenden Schicht (3) aus ausschließlich oder überwiegend dem ersten Polymeren und einer zur ersten Schicht benachbarten zweiten Schicht (4,5) aus dem zweiten Polymeren besteht, wobei das Haftungsvermögen der beiden Polymere bei schichtweiser Extrusion aufeinander gering ist, **dadurch gekennzeichnet, daß** zur Verbesserung der Haftung der beiden Schichten die erste oder die zweite Schicht eine Mischung beider Polymere umfaßt.

2. Element nach Anspruch 1, **dadurch gekennzeichnet, daß** die Mischung beider Polymere einen Verträglichkeitsvermittler enthält.

3. Element nach Anspruch 1 oder 2, **dadurch gekennzeichnet, daß** beide Schichten (3, 4) eine Mischung beider Polymere umfassen.

4. Element nach einem der vorhergehenden Ansprüche, **dadurch gekennzeichnet, daß** die Schichten (3 - 5) kontinuierlich ineinander übergehen.

5. Element nach einem der vorhergehenden Ansprüche, **dadurch gekennzeichnet, daß** die zweite Schicht (4) eine Oberfläche der Umhüllung bildet.

6. Element nach einem der Ansprüche 1 bis 4, **dadurch gekennzeichnet, daß** die zweite Schicht (4) eine haftvermittelnde Lage zwischen einer Schicht (3), in der das polymere Material ausschließlich oder überwiegend das erste Polymer ist, und einer weiteren Schicht (5), in der das polymere Material überwiegend das zweite Polymer ist, bildet.

7. Element nach einem der vorhergehenden Ansprüche, **dadurch gekennzeichnet, daß** das Kernelement eine polymere optische Faser ist.

8. Element nach einem der Ansprüche 1 bis 6, **dadurch gekennzeichnet, daß** die Umhüllung die Isolierung oder der Mantel eines Kabels ist.

9. Element nach einem der vorhergehenden Ansprüche, **dadurch gekennzeichnet, daß** die innere Oberfläche der Umhüllung ein Polyolefin, einen Polyester, ein Polyetherimidcopoloymer oder ein Polyacetal umfaßt.

10. Element nach einem der vorhergehenden Ansprüche, **dadurch gekennzeichnet, daß** die äußere Oberfläche der Umhüllung ein Polyurethan, einen Polyester, ein Polyamid oder ein Polyetherimidcopolymer umfaßt.

11. Element nach einem der vorhergehenden Ansprüche, **dadurch gekennzeichnet, daß** mindestens ein Polymer einen Füllstoff und/oder ein Flammschutzmittel enthält.

## Claims

1. An elongated flexible element with a core component (1, 2) for energy and/or data transmission and an extruded polymer cover made of at least one first and one second polymers, wherein the cover consists of a first layer (3), made exclusively or predominantly of the first polymer, surrounding the core component and a second layer (4, 5), adjacent to the first layer made of the second polymer, wherein the adhesion between the two polymers when extruding them onto each other layer-wise is low, **characterized in that** the first or the second layer includes a mixture of both polymers to improve the adhesion of the two layers.

2. A component according to claim 1, **characterized in that** the mixture of both polymers contains a compatibility promoter.

3. A component according to claim 1 or 2, **characterized in that** both layers (3, 4) include a mixture of both polymers.

4. A component according to one of the preceding claims, **characterized in that** the layers (3 - 5) continuously merge into one another.

5. A component according to one of the preceding claims, **characterized in that** the second layer (4) forms a surface of the cover.

6. A component according to one of the claims 1 to 4, **characterized in that** the second layer (4) forms an adhesion-promoting layer between a layer (3), in which the polymer material is exclusively or predominantly the first polymer, and another layer (5), in which the polymer material is predominantly the second polymer.

7. A component according to one of the preceding claims, **characterized in that** the core component is a polymer optical fiber.

8. A component according to one of the claims 1 to 6, **characterized in that** the cover is the insulation or the sheath of a cable.

9. A component according to one of the preceding claims, **characterized in that** the inner surface of the cover includes a polyolefin, a polyester, a polyetherimide copolymer or a polyacetal.

10. A component according to one of the preceding claims, **characterized in that** the outer surface of the cover includes a polyurethane, a polyester, a polyamide or a polyetherimide copolymer.

11. A component according to one of the preceding claims, **characterized in that** at least one polymer contains a filling material and/or a flame retardant.

## Revendications

1. Élément flexible allongé composé d'un coeur (1, 2) pour la transmission d'énergie et/ou de données et d'une gaine polymère extrudée, elle-même composée d'au moins un premier et un deuxième polymère et constituée d'une première couche (3) enveloppant le coeur et composée exclusivement ou majoritairement du premier polymère, ainsi que d'une deuxième couche (4, 5) contiguë à la première et composée du deuxième polymère, la force d'adhérence des deux polymères superposés par extrusion en couches étant réduite, **caractérisé par le fait que**, pour améliorer l'adhérence des deux couches, la première ou la deuxième couche comprend un mélange des deux polymères.

2. Élément conforme à la revendication 1, **caractérisé par le fait que** le mélange des deux polymères contient un agent compatibilisant.

3. Élément conforme à la revendication 1 ou 2, **caractérisé par le fait que** les deux couches (3, 4) comprennent un mélange des deux polymères.

4. Élément conforme à l'une des revendications précédentes, **caractérisé par le fait que** les couches (3-5) se mêlent de manière continue.

5. Élément conforme à l'une des revendications précédentes, **caractérisé par le fait que** la deuxième couche (4) forme une surface de la gaine.

6. Élément conforme à l'une des revendications 1 à 4, **caractérisé par le fait que** la deuxième couche (4) forme une surface d'agent adhésif entre une couche (3) dont le matériau polymère est exclusivement ou majoritairement composé du premier polymère et une autre couche (5) dont le matériau polymère est majoritairement composé du deuxième polymère.

7. Élément conforme à l'une des revendications précédentes, **caractérisé par le fait que** le coeur est une fibre optique polymère.

8. Élément conforme à l'une des revendications de 1 à 6, **caractérisé par le fait que** la gaine constitue l'isolation ou l'enveloppe d'un câble.

9. Élément conforme à l'une des revendications précédentes, **caractérisé par le fait que** la surface interne de la gaine comprend une polyoléfine, un polyester, un copolymère polyetherimide ou un polyacétal.

10. Élément conforme à l'une des revendications précédentes, **caractérisé par le fait que** la surface externe de la gaine comprend une polyuréthane, un polyamide ou un copolymère polyetherimide.

11. Élément conforme à l'une des revendications précédentes, **caractérisé par le fait qu**'un polymère au moins contient une charge et/ou un agent retardateur de flammes.
